Europäisches Patentamt

European Patent Office

Office européen des brevets

(11) Publication number: **0 280 937 B1**

# EUROPEAN PATENT SPECIFICATION

(45) Date of publication of patent specification: **25.09.91**    (51) Int. Cl.⁵: **F16F 1/38**

(21) Application number: **88101933.5**

(22) Date of filing: **10.02.88**

(54) **Variable strength spring.**

(30) Priority: **02.03.87 IT 1954087**

(43) Date of publication of application:
**07.09.88 Bulletin 88/36**

(45) Publication of the grant of the patent:
**25.09.91 Bulletin 91/39**

(84) Designated Contracting States:
**CH DE ES FR GB LI SE**

(56) References cited:
**DE-B- 1 163 165**
**FR-A- 841 602**
**GB-A- 872 230**
**GB-A- 1 024 554**
**US-A- 3 402 924**

(73) Proprietor: **PIRELLI SISTEMI ANTIVIBRANTI S.P.A.**
**Piazzale Cadorna, 5**
**I-20123 Milan(IT)**

(72) Inventor: **Orlandi, Alfredo**
**Vicolo Cortile, 21**
**I-27021 Bereguardo Pavia(IT)**

(74) Representative: **Giannesi, Pier Giovanni et al**
**Pirelli S.p.A. Direzione Brevetti Piazzale Cadorna, 5**
**I-20123 Milano(IT)**

**Description**

The present invention relates to a variable strength spring, comprising a tubular body to which inner is situated a contrast seat, concave and coaxial in respect to the tubolar body, a ring made of elastomeric material coaxially engaged into the tubolar body and having a checking surface turned towards said contrast seat and a connection tang rigidly engaged in the elastic ring on the opposite side in respect to the checking surface. Such a variable strength spring is known from the GB-A-872 230.

It is known that springs of said type are particularly suitable to be used in realizing suspensions for transport vehicles, for example railway waggons, which are subject to support considerable variations of static load.

It is observed that springs destined to said uses must present, as essential characteristic, a growing rigidity by the increase of static load to which they are asked to support.

Considering the behaviour of suspensions in railway waggons, springs must present a relatively reduced rigidity when the waggon is unloaded (load acting on each spring equal to 800 - 900 kgf, approximately) or when the transported load is of weight relatively low. This is a necessary condition to avoid that, during running, undesirable disengagements between wheel and rail might occur due to unavoidable unevenness, particularly in connection with frogs between railways. In conditions of a limited static load, a low strength of spring is essential, also to avoid that various impacts supported by wheels during running are entirely sent to the suspended mass.

Vice versa, when the static load is of a considerable entity (4200-4800 Kgf.), springs must have a high strength, so that in situation of static load variations, do not correspond excessive variations of springs arrow and, hence, excessive vertical movements of the vehicle centre gravity.

To satisfy these needs, springs which comprise essentially a shaped elastic ring are utilized; this shaped elastic ring is realized in elastomeric material of suitable rigidity, which is rigidly and coaxially engaged inside the tubolar body.

The tubolar body is shaped in order to present coaxially, at its inner, a concave contrast seat connecting with a cylindric wall inside the tubolar body. Such contrast seat appears turned towards the elastic ring and suitably spaced by the same.

In the elastic ring is also rigidly engaged a connection tang, whose a fastening portion protrudes from the same ring on the opposite side in respect of the above mentioned contrast seat.

The assembling of spring foresees, substantially, that either the tubolar body or the connection tang are respectively fixed to the parts under relative movement, i.e. to the suspended mass and to the non-suspended mass of the vehicle and vice versa. In such a situation the loads sent to the spring are hindered by the consequent elastic deformations of the ring.

Choosing suitable ways for the various spring components, it is possible to confer to said spring, a rigidity that, within certain limits, grows by the static load increase.

In the present solutions, it is foreseen that, when spring must support loads relatively reduced, the entire section of the deformable ring appears substantially stressed to shearing stress. In such a situation the elastic ring is susceptible of deformations relatively high under the action of load variations and the spring shows a rigidity relatively reduced whose value remains substantially constant within certain limits of load. In these limits the elastic ring is deforming moving in the tubular body without interferring with the contrast seat foreseen in said tubolar body. When the load increases beyond the above mentioned limits, the elastic ring, deforming itself, goes progressively in contact, by its checking surface duly shaped, with the above mentioned contrast seat.

In such a situation, the elastic ring is also stressed to compression, with stresses little by little growing up, while the contrast surface inhibits further deformations. By this, it is determined a considerable raise of spring rigidity by the load increase.

It is noted that known spring, although they allow to get rigidity variations, by the increase of static load, they don't have shown, up to now, a full satisfactory behaviour.

As a matter of fact, as appears from what hereabove described, the rigidity of said springs is substantially subjected to raise by the increase of load, only after that the same load has exceeded a pre-determined value.

The main purpose of the present invention is of eliminating such drawback, realizing a variable strength spring also when it must support loads relatively reduced.

This aim and others, which will now be better understood from the following detailed description, are substantially achieved by a variable strength spring, including:
- a tubular body to which inner there is a contrast seat, concave and coaxial in respect to the same tubular body;
- an elastic ring coaxially engaged in the tubolar body and having a checking surface turned towards said contrast seat;
- a connection tang rigidly engaged in the elastic ring in the opposite side in respect to the supporting surface, characterized by the fact of comprising:

- a perimetral groove extending towards the inner of the elastic ring which defines, substantially, on the longitudinal length of said elastic ring, a first portion fast to the tubolar body and disposed on the opposite side in respect to the contrast seat and a second portion slidely engaged in the tubular body;
- a rabbet edge disposed on the outer perimetral length of said second portion;
- a stopping area housed inside the tubular body, said stopping area being destined to interferes with said rabbet edge in order to stop the run of the second portion when the connecting tang appears displaced towards the tubolar body beyond a pre-determined limit.

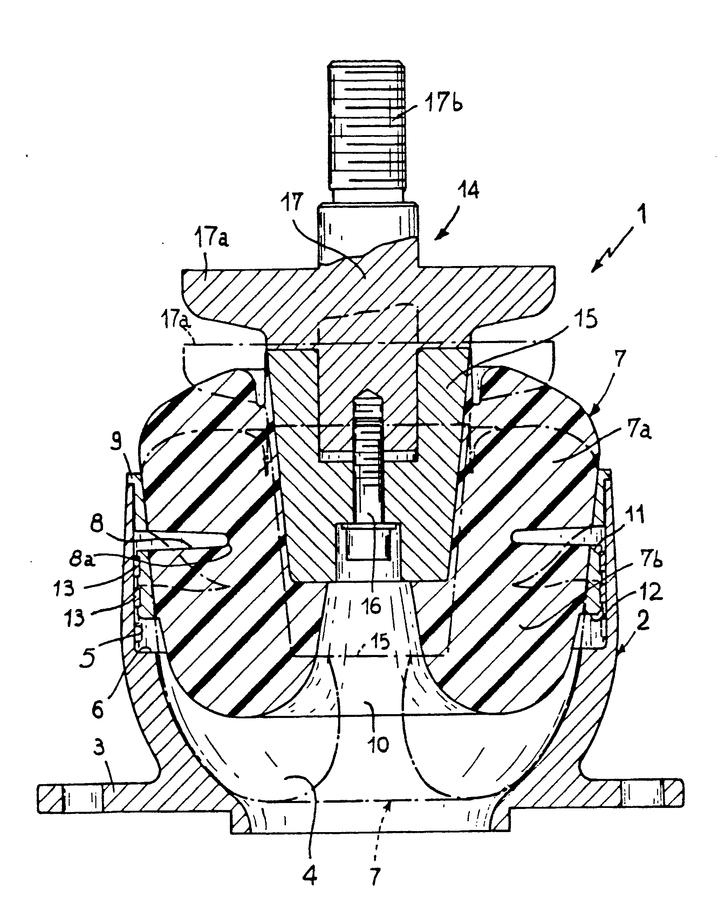

Further characteristics and advantages will be better shown from the following detailed description of a preferred but not exclusive execution of a variable strength spring, according to the present invention, described therein, with reference to the enclosed drawing, given only for indicative and not limitative aim, in which the unique figure represents the spring in reference sectioned according to a longitudinal median plane.

With reference to that figure, by 1 has been globally indicated a variable strength spring, according to the present invention.

The spring 1 includes a tubolar body 2 of circular shape, provided with a connection flange 3 by which same tubolar body 2 can be fixed to the non-suspended mass of a railway waggon. Inside the tubolar body is coaxially housed, in correspondence of its own end, a contrast seat 4 and an inner cylindric surface 5. Originally, between contrast seat and the inner cylindric surface 5, a stopping seat 6 is foreseen, which is radially extending inside tubular body 2, whose aims will be better shown further on.

Inside tubular body 2 is coaxially engaged an elastic ring 7, made of elastomeric material of suitable rigidity, which is provided with a groove 8 radially extended from outside towards inside.

Substantially, the groove 8 divides the longitudinal length of elastic ring 7 in a first portion 7a and in a second portion 7b.

Considering a preferred embodiment, it is foreseen that the groove 8 is located on the longitudinal length of ring 7 at a position such that the area of the ring section 7 is equally divided between the first portion 7a and the second portion 7b.

Preferably, the ratio value between the radial deepness of the groove 8 and the original radial thickness of the elastic ring 7 at that longitudinal position, is comprised between 0.4 and 0.6, i.e. the radial deepness is comprised between 40% and 60% of the original radial thickness in correspondence of the groove. The width of the groove 8 is not of considerable importance tc the aims of a suitable functioning of spring 1. It is however foreseen that groove 8 finishes, inside ring 7, by a suitably joined-

end 8a, to avoid points of major vulnerability in which ruptures of elastic ring 7 may occur.

The first portion 7a appears fast to the tubolar body 2 and it is disposed on the opposite side in respect to the contrast seat 4. Precisely, the first portion 7a is fixed by a rubber-metal connection to a flange 9, which is, on its turn, fast to the tubolar body 2.

The second portion 7b presents a check surface 10 suitable shaped and turned towards the contrast seat 4 which is, outwardly, provided with the annular rigid element 11, which is fast to the same contrast seat by a rubber-metal connection.

The annular element 11 is slidely engaged along the inner cylindric surface 5 and presents an advantageous rabbet edge 12 contrapposed to the stopping seat 6 and spaced from said stopping seat according to a pre-determined measure.

It is also foreseen that between the annular element 11 and the inner cylindric surface 5 of the tubolar body 2, are interposed two or more sliding rings 13 made of low friction coefficient material.

Moreover, the spring 1 comprises a connection tang 14 which connects spring 1 to the suspended mass of a waggon; this connection tang is fixed inside the elastic ring 7.

The connection tang 14 is preferably constituted by a tronco-conic element 15 rigidly engaged inside the elastic ring 7 by a rubber-metal connection. Furthermore, the connection area between elastic ring 7 and the tronco-conic element 15 is substantially identic to the fastening area of first portion 7a to the flange 9 fixed to the tubolar body 2.

To the tronco-conic element 15 is removably associated, by a bolt 16, a connection portion 17. The latter presents an annular shoulder 17a radially extending over the elastic ring 7 and a threaded portion 17b disposed on the opposite side in respect to the tronco-conic element 15.

After having described all the above in a structural way, this is now the functioning of the spring in reference.

When spring is asked to support load, the connection tang 14 and the tubolar body 2, are mutually approaching, contrasted by the action exercited by the elastic ring 7.

Originally, when spring 1 must bear loads of entity relatively reduced, the trend of a mutual approaching between connection tang 14 and tubolar body 2 is only contrasted by the elastic reaction of first portion 7a, which is substantially deformed due to the shearing stresses. The second portion 7b does not contrast at all the action of load, as it is freely slidable along the inner cylindric surface 5.

In such a situation, the static load variations sent to spring 1 will cause relative displacements between the connection tang 14 and the tubolar body 2 of relatively high entity. In other words, spring 1 will present a rigidity relatively low.

By the growing of load, a progressive approaching of rabbet edge 12 towards stopping seat 6, foreseen inside tubular body 2, will occur. In this brief phase the spring rigidity 1 remains almost constant, until when, a pre-determined load value is achieved, a mutual contact between rabbet edge 12 and stopping seat 6 will occur.

When reached and exceeded said value, the load acting on spring 1 is also contrasted by the action determined by the consequent deformation of second portion 7b which is under shearing stress. The spring 1 rigidity appears therefore increased, as the loads that act on same spring are contrasted by the elastic reactions exercised by the whole section of elastic ring 7.

The strength value of spring 1 is therefore subject to be ulteriourly increased when, by further increase of load acting on same spring, the checking surface 10 is put in contact with the contrast seat 4, as clearly oulined with a sketched line as per enclosed drawing. In such a situation, in fact, the mutual approaching between connection tang 14 and tubolar body 2 is also contrasted by compression stresses induced by elastic ring 7 by the action determined between contrast seat 4 and same elastic ring 7.

The checking surface 10 and the contrast seat 4 are shaped in order to enter in contact according to area progressively growing by the load increase. As a consequence of the above, said compression stresses, and consequently the rigidity of spring 1, are subject to grow progressively by the load increase acting on spring 1.

The invention aims are achieved.

As a matter of fact, whereas known springs have a constant rigidity during phase of shearing stress and a rigidity increase during phase of shearing stress and compression, the spring in reference presents a first value of constant rigidity, during starting phase of shearing stress, a second value of constant rigidity, major than first value, during the second phase of shearing stress, and a further rigidity increase during the phase of shearing stress and compression.

It is also underlined that, advantageously, the rigidity values of the spring according to the invention, are substantially maintained under the correspondent rigidity values of the known springs during the phases of shearing stress, in order to reach the same values of the traditional springs during shearing stress and compression working phases.

It is also understood that the above means a better behaviour of the spring, particularly in functioning conditions comprising low and medium load.

More specifically, to satisfy particular requirements, it is also possible to foresee more movable portions 7b separated by grooves 8 and destined to interfer in succession with as many stoppings areas 6.

## Claims

1. A variable strength spring (1), comprising:
   - a tubular body (2) to which inside is defined a concave, coaxial contrast seat (4) in respect to same tubular body;
   - an elastic ring (7) coaxially engaged inside the tubular body (2) and showing a checking surface (10) turned towards said contrast seat (4);
   - a connection tang (14) rigidly engaged in the elastic ring (7) on the opposite side in respect to the checking surface (10), characterized by the fact of comprising:
   - a perimetral groove (8) extending itself towards the inside of said elastic ring (7) which substantially defines on the longitudinal length of the latter a first portion (7a) fast in respect to said tubular body (2) and disposed on the opposite side of the contrast seat, and a second portion (7b) slidely engaged inside the tubular body;
   - a rabbet edge (12) disposed on the outer perimetral length of said second portion (7b);
   - a stopping seat (6) obtained inside of the tubular body, said stopping seat being destined to interfere with said rabbet edge (12) to stop the run of said second portion (7a) when the connection tang (14) appears moved towards the tubular body beyond a pre-determined measure.

2. A spring as claimed in claim 1, characterized by the fact that said groove (8) is located at a longitudinal position such that the area of the elastic ring section is equally divided between said first (7a) and second (7b) portion.

3. A spring as claimed in claim 1, characterized by the fact that said groove (8) is substantially radially extending with a radial deepness comprised between 40% and 60% of the original radial thickness of the elastic ring (7) at said longitudinal position.

4. A spring as claimed in claim 1, characterized by the fact that said rabbet edge (12) is disposed on an annular element rigidly engaged to said second portion (7b).

5. A spring as claimed in claim 1, characterized by the fact that between said second portion (7b) and the tubular body (2) is interposed a couple of sliding rings (13) made of a material of a low friction coefficient.

6. A spring as claimed in claim 1, characterized by the fact that said first portion (7a) appears linked to the tubular body (2) according to a fastening area which is equal to the fastening area between the connection tang (14) and the elastic ring (2).

7. A spring as claimed in claim 1, characterized by the fact that between said rigid annular element (11) and said tubular body (2) is disposed a couple of sliding rings (13) made of a material of a low friction coefficient

## Revendications

1. Ressort à rigidité variable (1), comprenant:
   - un corps tubulaire (2), à l'intérieur duquel est défini un siège d'appui coaxial concave (4) par rapport audit corps tubulaire;
   - une bague élastique (7) insérée coaxialement à l'intérieur du corps tubulaire (2) et présentant une surface de contrôle (10) tournée vers ledit siège d'appui (4);
   - une languette de raccordement (14) insérée de façon rigide dans la bague élastique (7) sur le côté opposé à la surface de contrôle (10),
   caractérisé en ce qu' il comprend:
   - une gorge périphérique (8) qui s'étend à l'intérieur de ladite bague élastique (7) et définit sensiblement, sur l'étendue en longueur de cette bague, une première partie (7a) fixée par rapport audit corps tubulaire (2) et disposée sur le côté opposé du siège d'appui, et une seconde partie (7b) s'appliquant avec glissement à l'intérieur du corps tubulaire;
   - un bord à feuillure (12) s'étendant sur le pourtour extérieur de ladite seconde partie (7b);
   - un siège de butée (6) logé à l'intérieur du corps tubulaire et destiné à être placé en contact avec ledit bord à feuillure (12) afin d'arrêter le déplacement de ladite seconde partie (7a) lorsqu'il s'avère que la languette de raccordement (14) a été déplacée en direction du corps tubulaire au-delà d'une distance prédéterminée.

2. Ressort selon la revendication 1, caractérisé en ce que ladite gorge (8) est située dans une position longitudinale telle que la surface de la section de la bague élastique est subdivisée de façon égale entre ladite première partie (7a) et ladite seconde partie (7b).

3. Ressort selon la revendication 1, caractérisé en ce que ladite gorge (8) s'étend sensiblement radialement avec une profondeur radiale comprise entre 40 % et 60 %, l'épaisseur radiale d'origine de la bague élastique (7) dans ladite position longitudinale.

4. Ressort selon la revendication 1, caractérisé en ce que ledit bord à feuillure (12) est disposé sur un élément annulaire inséré rigidement dans ladite seconde partie (7b).

5. Ressort selon la revendication 1, caractérisé en ce qu'entre ladite seconde partie (7b) et le corps tubulaire (2) est intercalé un couple de bagues coulissantes (13) réalisés en un matériau possédant un faible coefficient de frottement.

6. Ressort selon la revendication 1, caractérisé en ce que ladite première partie (7a) est reliée au corps tubulaire (2) conformément à une surface de fixation qui est égale à la surface de fixation existant entre la languette de raccordement (14) et la bague élastique (2).

7. Ressort selon la revendication 1, caractérisé en ce qu'entre ledit élément annulaire rigide (11) et ledit corps tubulaire (2) est prévu un couple de bagues coulissantes (13) réalisés en un matériau possédant un faible coefficient de frottement.

## Patentansprüche

1. Feder (1) mit variabler Kennlinie, umfassend
   - einen rohrartigen Körper (2), auf dessen Innenseite ein konkaver, gleichachsiger Gegen- bzw. Kontrastsitz (4) mit Bezug auf den gleichen rohrartigen Körper gebildet ist;
   - einen elastischen Ring (7), der auf der Innenseite des rohrartigen Körpers (2) gleichachsig im Eingriff steht und eine Begrenzungsfläche (10) zeigt, die in Richtung gegen den Gegensitz (4) gewandt ist;
   - ein verbindungsheft (14), welches in dem elastischen Ring (7) auf der mit Bezug auf die Begrenzungsfläche (10) gegenüberliegenden Seite starr im Eingriff steht,

**gekennzeichnet** durch

- eine Umfangsnut (8), die sich in Richtung zur Innenseite des elastischen Ringes (7) erstreckt und entlang der Längslänge des elastischen Ringes einen ersten Abschnitt (7a), der mit Bezug auf den rohrartigen Körper (2) fest bzw. unbeweglich und an der gegenüberliegenden Seite des Gegensitzes angeordnet ist, und einen zweiten Abschnitt (7b) bestimmt, der mit der Innenseite des rohrartigen Körpers in Gleiteingriff steht;
- eine Falzkante (12), die an der äußeren Umfangslänge des zweiten Abschnitts (7b) angeordnet ist; und
- einen Anschlagsitz (6) der auf der Innenseite des rohrartigen Körpers erhalten und dazu bestimmt ist, mit der Falzkante (12) zusammenzuwirken, um Bewegung des zweiten Abschnitts (7b) anzuhalten, wenn das Verbindungsheft (14) in Richtung gegen den rohrartigen Körper über ein vorbestimmtes Ausmaß hinaus bewegt wird.

2. Feder nach Anspruch 1, dadurch gekennzeichnet, daß die Nut (8) an einer solchen Längsposition angeordnet ist, daß die Fläche des Querschnitts des elastischen Ringes zwischen dem ersten (7a) und dem zweiten (7b) Abschnitt gleich geteilt ist.

3. Feder nach Anspruch 2, dadurch gekennzeichnet, daß die Nut (8) sich im wesentlichen radial erstreckt mit einer radialen Tiefe zwischen 40% und 60% der ursprünglichen radialen Dikke des elastischen Ringes (7) an der genannten Längsposition.

4. Feder nach Anspruch 1, dadurch gekennzeichnet, daß die Falzkante (12) an einem ringförmigen Element angeordnet ist, welches in starrem Eingriff mit dem zweiten Abschnitt (7b) steht.

5. Feder nach Anspruch 1, dadurch gekennzeichnet, daß zwischen dem zweiten Abschnitt (7b) und dem rohrartigen Körper (2) ein Paar von Gleitringen (13) angeordnet ist, welches aus einem Material mit niedrigem Reibungskoeffizienten gebildet ist.

6. Feder nach Anspruch 1, dadurch gekennzeichnet, daß der erste Abschnitt (7a) mit dem rohrartigen Körper (2) in einem Befestigungsbereich verbunden ist, der gleich dem Befestigungsbereich zwischen dem Verbindungsheft (14) und dem elastischen Ring (7) ist.

7. Feder nach Anspruch 1, dadurch gekennzeichnet, daß zwischen dem starren ringförmigen Element (11) und dem rohrartigen Körper (2) ein Paar von Gleitringen (13) angeordnet ist, welches aus einem Material mit niedrigem Reibungskoeffizienten gebildet ist.

EP 0 280 937 B1

7